# FASCICULE DE BREVET EUROPEEN

(11) **EP 3 592 524 B1**
(45) Date de publication et mention de la délivrance du brevet: **03.11.2021**
(21) Numéro de dépôt: 18712959.8
(22) Date de dépôt: 06.03.2018
(51) Int. Cl.: B29C 33/30

(54) **CHASSIS MOULE MONOBLOC POUR PEAU DE DRAPAGE DE COMPOSITES**
EINSTÜCKIGER GEGOSSENER RAHMEN FÜR EINE LAYUP-VERBUNDHAUT
ONE-PIECE MOULDED FRAME FOR A COMPOSITE LAYUP SKIN

(30) Priorité: 10.03.2017 FR 1751951
(43) Date de publication de la demande: 15.01.2020
(73) Titulaire: Ferry Capitain, 52300 Vecqueville (FR)
(72) Inventeur: CAHEN, Mathieu, 55140 Vaucouleurs (FR)
(74) Mandataire: Cabinet Bleger-Rhein-Poupon
(86) Numéro de dépôt international: PCT/FR2018/050511
(87) Numéro de publication internationale: WO 2018/162838

(56) Documents cités:
- CN-A- 103 527 915
- CN-Y- 201 273 045

## Description

La présente invention entre dans le domaine des gabarits supports pour la réception d'une pièce en matériau composite en vue de sa polymérisation en autoclave.

Plus particulièrement, la présente invention concerne un châssis dont au moins une partie est destinée à supporter une peau de réception d'une pièce en matériau composite à polymériser en autoclave, ladite peau définissant la forme générale de ladite pièce, de manière spécifique ledit châssis est une pièce monobloc venant de fonderie. Le document WO2013103739 divulgue un système d'outillage permettant de former une pièce comportant une structure en feuille, une structure en treillis, et un système de fixation. La structure en feuille est une structure composite en fibre de carbone et définit une surface de moule pour définir au moins une partie de la pièce. La structure en treillis comporte une pluralité de composants de treillis. Les composants de treillis sont tubulaires et réalisés en Invar. Au moins une extrémité de chaque composant de treillis est sertie. Les extrémités serties des composants de treillis sont soudées à d'autres composants de treillis pour former la structure de treillis.

Un tel dispositif trouvera une application particulière dans le domaine de la réalisation de pièces en matériau composite issues d'une opération de drapage d'un pré-imprégné.

De manière générale, une telle pièce en matériau composite est montée par des drapages successifs d'un tissu de type pré-imprégné sur une peau métallique reposant sur un châssis. L'ensemble composite, peau et châssis est introduit dans un autoclave afin de faire polymériser le composite reposant sur la peau, généralement à des températures de l'ordre de 200°C et dans des conditions particulières de pression.

De manière connue, les châssis de l'art antérieur consistent en des structures mécanosoudées.

Lors de passages répétés en autoclave à des températures d'environ 200°C, ces châssis existants ont tendance à vriller et à se déformer, en particulier au niveau de leurs points de soudure.

En effet, la multiplication des soudures des châssis présente comme inconvénient de générer un fort risque de fissuration des structures. Ces fissures modifient la géométrie initiale du châssis, déformation qui se répercute à la peau et par conséquent à la géométrie de la pièce en composite que l'on polymérise, laquelle présentera alors une géométrie inadéquate, instable et non désirée à cause de la présence des fissures du châssis.

De ce fait, les utilisateurs sont dans l'obligation de vérifier régulièrement l'intégrité des châssis support, et de remplacer ceux-ci si nécessaire. Il y a donc un grand intérêt à utiliser un châssis support non déformable lors des répétitions des cycles thermiques.

Dans ce but, il est bien entendu possible de surdimensionner les éléments qui composent la structure du châssis, notamment en augmentant la section. Cependant, des problèmes pratiques sont liés à l'augmentation du poids. En effet, plus l'épaisseur de ces éléments est importante, plus l'apport en énergie nécessaire pour atteindre rapidement la température adéquate de polymérisation du matériau composite est grande, et plus le temps de refroidissement est long.

Il est ainsi nécessaire de trouver un juste milieu pour la valeur de l'épaisseur des éléments composant le châssis, afin que l'apport en énergie lors du processus d'autoclavage soit minimum tout en conservant une rigidité adéquate pour éviter une modification de forme du châssis.

Le but est de réduire les coûts de réalisation du processus de polymérisation de matériau composite au minimum. La réduction peut se faire aussi bien en diminuant la quantité d'énergie nécessaire pour réaliser le processus, que la fréquence à laquelle on remplace le système châssis/peau suite à des fissurations et/ou déformations ou pertes de rigidité.

En outre, le risque de fissuration du châssis surmonté de la peau sur laquelle repose le matériau composite à polymériser dépend également de la nature du matériau utilisé, en particulier de ses propriétés de dilatation.

De manière connue, la peau et le châssis sont réalisés dans un matériau à faible dilatation pour éviter les fissurations lors du processus de cyclage thermique.

Dans le domaine du drapage des composites, en fonction du composite à polymériser, la peau utilisée peut être de composition chimique très complexe contrairement au châssis. Dans ce cas, les propriétés de dilatation de la peau diffèrent de celles du châssis constitué d'un matériau distinct de la peau et moins complexe. Cette différence de propriétés de dilatation entre le châssis et la peau a pour désavantage d'augmenter le risque de fissuration de l'ensemble. Il en résulte donc également une déformation de l'ensemble châssis/peau. Cette déformation due à des propriétés de dilatation éloignées se traduit, en cours du processus de cyclage thermique, par la polymérisation d'un matériau composite de géométrie inadéquate.

Ainsi, afin de pallier les inconvénients susmentionnés de l'état de la technique, il convient de trouver une solution alternative pour les systèmes de châssis/peau permettant la polymérisation de matériau composite en autoclave.

Plus précisément, il convient de trouver un système de châssis/peau adapté qui soit non-fissurable, non déformable, et qui conserve une rigidité suffisante même après plusieurs cycles de polymérisation d'un matériau composite. Il convient également de trouver un système châssis/peau qui engage un volume de matière permettant de minimiser au maximum l'apport en énergie nécessaire pour obtenir la température visée lors du processus de polymérisation.

L'objectif de la présente invention est de limiter le risque de fissuration au maximum, mais aussi les frais énergétiques et le coût industriel du processus de polymérisation de matériau composite. De cette manière, le système châssis/peau pourra être pérenne dans le temps, restera inchangé et de géométrie constante même après une répétition de cycles de polymérisation de matériau composite.

La présente invention a pour but de proposer un châssis dont au moins une partie est destinée à supporter une peau de réception d'une pièce en matériau composite à polymériser en autoclave, ladite peau définissant la forme générale de ladite pièce. Ledit châssis est une pièce monobloc venant de fonderie permettant de pallier les inconvénients de l'état de la technique.

Selon l'invention, le châssis étant une pièce monobloc obtenue par fonderie ne comportant aucune soudure, il n'y a aucun risque de fissuration du châssis, résultant de la présence de soudure, lors du processus de polymérisation du matériau composite en autoclave.

De plus, selon d'autres caractéristiques :
- ladite au moins une partie du châssis destinée à supporter ladite peau est constituée par une portion conformée de manière complémentaire à ladite peau ;
- ladite portion, conformée de manière complémentaire à ladite peau, comporte des éléments saillants destinés à supporter ladite peau.

La portion du châssis destinée à supporter la peau est de profil évolutif selon la forme de la peau.

De manière avantageuse, la peau ne repose pas directement sur ladite portion du châssis, mais est maintenue à une distance constante de celle-ci par lesdits éléments saillants. En effet, lesdits éléments saillants de ladite portion supportent directement ladite peau et permettent de la maintenir à une distance constante. Cette distance est la plus faible possible pour minimiser le volume du châssis mais suffisante pour permettre à la peau d'atteindre la température adéquate de polymérisation le plus rapidement possible.

Selon d'autres caractéristiques le châssis de l'invention :
- comporte des segments comprenant des nervures longitudinales ;
- comporte des segments de section transversale en T, en sorte de former trois nervures longitudinales.

Selon un mode de réalisation particulier de l'invention, le châssis est constitué de moyens de préhension et/ou de moyen de déplacement et de trois structures annulaires juxtaposées reliées entre elles par des traverses, présentant avantageusement chacune des éléments saillants destinés à supporter ladite peau.

Il est noté que le nombre de structures annulaires dépend de la taille de la peau, ce nombre augmente en fonction de l'augmentation de la taille de ladite peau.

Lesdits moyens de préhension permettent de faciliter la manutention du châssis et permettent à l'utilisateur de manipuler facilement le châssis de l'invention afin par exemple de le mettre dans l'autoclave ou de l'en sortir.

De manière avantageuse, l'épaisseur desdites structures annulaires et des segments est comprise entre 8 et 12 mm, de préférence 10 mm.

Ainsi, le châssis est réalisé avec l'épaisseur la plus faible possible permettant toutefois de conserver la rigidité souhaitée. L'épaisseur faible permet d'optimiser au maximum la quantité d'énergie nécessaire à la montée en température au sein de l'autoclave en vue de la polymérisation du matériau composite considéré. Par rapport à l'état de la technique, l'énergie nécessaire pour la montée en température pour la polymérisation d'un même type de matériau est diminuée d'au moins 20% avec cette épaisseur.

Selon un mode de réalisation particulier de l'invention, le châssis est réalisé dans un alliage présentant un coefficient de dilatation < 7.10⁻⁶ K⁻¹ à 200°C.

Avantageusement, selon ce mode de réalisation particulier de l'invention, ledit alliage présente un coefficient de dilatation thermique compris entre 4.10⁻⁶ K⁻¹ et 5.10⁻⁶ K⁻¹, de préférence 4,6.10⁻⁶ K⁻¹ pour des températures comprises entre 0 et 200 °C.

On comprendra par ailleurs que le châssis et la peau doivent de préférence avoir des compositions chimiques très proches pour que leurs coefficients de dilatation le soient aussi, en sorte de minimiser les risques de fissuration.

De manière avantageuse, on notera que selon l'invention, la peau vient de moulage, en sorte que cela permet de réaliser le châssis et ladite peau dans une même nuance.

La présente invention a donc également pour objet un gabarit support comportant un châssis selon l'invention, associé à une peau réalisée dans la même nuance, et de préférence venant de moulage.

D'autres caractéristiques et avantages de l'invention ressortiront de la description détaillée ci-après d'un mode de réalisation non limitatif de l'invention, en référence aux figures annexées, dans lesquelles :
- la figure 1 représente une vue schématique en perspective d'un gabarit support comprenant un châssis selon l'invention ;
- la figure 2 représente une vue schématique en perspective sous un autre angle du même châssis.

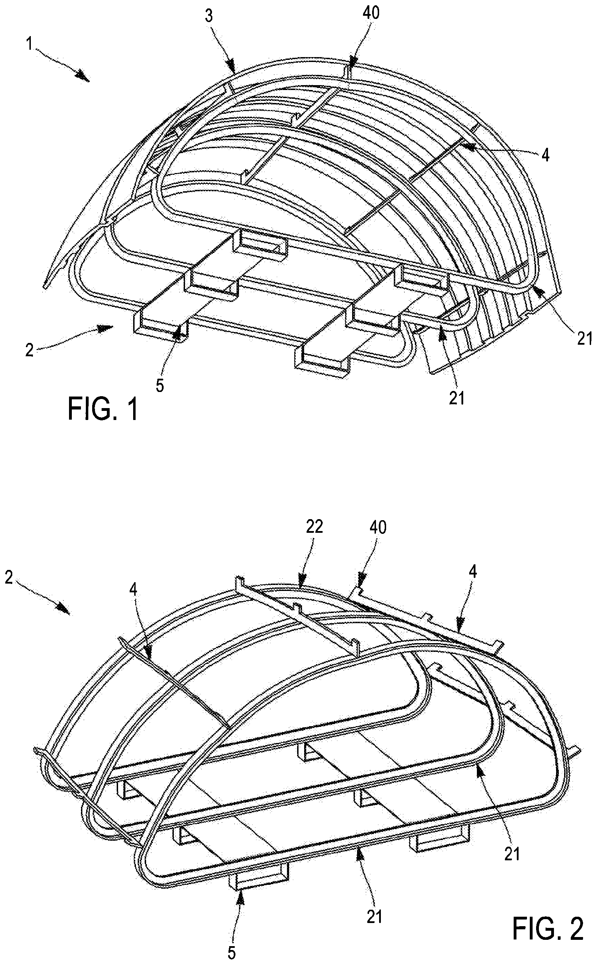

En référence à la figure 1, on peut voir un gabarit support 1 pour la réception d'une pièce, non représentée, en matériau composite en vue de sa polymérisation en autoclave, comprenant un châssis 2 selon l'invention supportant une peau 3 de réception d'une pièce en matériau composite à polymériser en autoclave.

En d'autres termes, le châssis 2 permet de supporter une peau 3 sur laquelle est drapé un pré-imprégné pour la réalisation d'une pièce en matériau composite, avant une polymérisation en autoclave ou four.

La forme de la peau 3 de réception de la pièce en matériau composite définit la forme générale de la pièce en matériau composite.

Plus précisément, la partie du châssis 2 destinée à supporter la peau 3 est constituée par une portion 22 conformée de manière complémentaire à la peau 3, tel que visible sur les figures.

Tel que visible sur les figures, la portion 22 comporte des éléments saillants 40 destinés à supporter la peau 3 et à la maintenir à une distance constante de la portion 22.

Les éléments 40 peuvent par exemple consister en des picots faisant partie intégrante de la pièce monobloc qui constitue le châssis 2.

La géométrie du châssis 2 est bien sûr adaptée à la forme de la peau 3 utilisée.

Selon l'invention, le châssis 2 est une pièce monobloc venant de fonderie, au travers d'un procédé de moulage à moule perdu et/ou noyau fusible, en sorte qu'il soit sans aucune soudure.

L'absence de soudure sur le châssis 2 a pour effet d'empêcher sa fissuration lors des cycles thermiques de polymérisation en autoclave ou en four.

Le caractère monobloc du châssis 2, permet d'éviter que celui-ci ne vrille suite à la répétition des cycles thermiques de polymérisation.

En outre, même en cas de dilatation, le châssis 2 étant monobloc, la dilatation sera uniforme et homogène.

Selon l'invention, le châssis 2 comporte des segments comprenant des nervures longitudinales.

Selon un mode de réalisation particulier visible sur les figures, le châssis 2 comporte des segments de section transversale en T, en sorte de former trois nervures longitudinales.

Selon le mode de réalisation particulier visible sur les figures, le châssis 2 monobloc est constitué de trois structures annulaires 21 juxtaposées reliées entre elles par des traverses 4, et également de moyens de préhension et/ou des moyens de déplacement 5.

Ces trois structures annulaires 21 sont espacées d'une distance sensiblement constante de manière à créer une structure de châssis 2 aérée capable de laisser circuler l'air.

Ces trois structures annulaires 21 sont capables de soutenir la peau 3 de réception du matériau composite à polymériser, et présentent comme avantage de diminuer au maximum le volume de matière nécessaire pour réaliser la pièce monobloc formant l'ensemble du châssis 2.

Avantageusement, ces structures annulaires 21 sont de section transversale en T afin d'augmenter la rigidité de la pièce monobloc du châssis 2.

Selon le mode de réalisation de ces figures, l'ensemble de ces trois structures annulaires 21 présente en partie supérieure la portion 22 comportant les traverses 4 et en partie inférieure les moyens de préhension et/ou les moyens de déplacement 5.

Les traverses 4 présentent des éléments saillants 40 destinés à supporter la peau 3 et à la maintenir à une distance constante de la portion 22, notamment des traverses 4.

Avantageusement, la distance générée par les éléments saillants 40 est la plus faible possible pour minimiser au maximum le volume du châssis 2. En d'autres termes, la distance entre la portion 22 du châssis 2 notamment entre la partie supérieure des structures annulaires 21 et la peau 3, est de préférence faible pour minimiser le volume du châssis 2, mais suffisante pour que la peau 3 ne soit pas en contact direct avec l'intégralité de la portion 22 du châssis 2.

Cette configuration a pour effet d'aérer la pièce monobloc du châssis 2 au maximum pour que la circulation de chaleur soit la plus facile et homogène possible.

Le châssis 2 étant destiné à être introduit dans un four ou un autoclave en vue de la polymérisation d'un matériau composite, sa conception aérée permet d'optimiser la circulation de l'air chaud ou froid selon le cas au sein du four ou de l'autoclave.

Selon cette forme de réalisation particulière, les parties supérieures des structures annulaires 21, représentant la portion 22 du châssis 2, présentent la même courbure que la peau 3.

Ainsi, selon l'invention, l'ensemble structures annulaires 21, traverses 4, moyens de préhension et/ou de déplacement 5 fait partie de la même pièce moulée, le tout étant monobloc pour constituer le châssis 2.

En outre, afin de limiter l'apport en énergie nécessaire à la montée en température au sein de l'autoclave pour réaliser la polymérisation du matériau composite, l'épaisseur des structures annulaires 21 et des traverses 4 est comprise entre 8 et 12 mm, de préférence 10 mm.

Cette épaisseur particulière permet au châssis 2 d'atteindre rapidement sa température de fonctionnement au sein de l'autoclave pour la polymérisation du composite et de limiter au maximum les pertes thermiques. Ainsi, un gain énergétique est réalisé ainsi qu'un gain économique.

Tel que visible sur les figures, les moyens de préhension et/ou de déplacement 5 permettent par exemple le déplacement du châssis 2 à l'intérieur ou à l'extérieur d'un autoclave et/ou d'un four avec un système de type chariot élévateur.

Selon un autre mode de réalisation particulier, les moyens de préhension peuvent consister notamment en des oreilles présentes sur lesdites structures annulaires 21 et faisant partie intégralement de la pièce monobloc venant de fonderie que constitue le châssis 2.

De manière préférentielle, la peau 3 et le châssis 2 sont réalisés dans une même nuance, ou dans des nuances présentant des caractéristiques et propriétés physicochimiques proches, afin de limiter les déformations dues à la différence de coefficient de dilatation entre les deux matières.

De manière encore plus préférentielle, la nuance a un faible coefficient de dilatation ce qui limite encore plus les risques de déformation.

Comme cela a déjà été évoqué, il peut être très avantageux de fabriquer la peau 3 par un procédé de moulage avec la même nuance que celle utilisée pour mouler le châssis 2.

## Revendications

1. Châssis (2) dont au moins une partie est destinée à supporter une peau (3) de réception d'une pièce en matériau composite à polymériser en autoclave, ladite peau (3) définissant la forme générale de ladite pièce, ledit châssis (2) étant une pièce monobloc venant de fonderie **caractérisé en ce que** :
- ladite au moins une partie du châssis (2) destinée à supporter ladite peau (3) est constituée par une portion (22) conformée de manière complémentaire à ladite peau (3),
- ledit châssis est réalisé dans un alliage présentant un coefficient de dilatation < à 7.10⁻⁶ K⁻¹ à 200°C

2. Châssis (2), selon la revendication précédente, **caractérisé en ce que** ladite portion (22), conformée de manière complémentaire à ladite peau (3), comporte des éléments saillants (40) destinés à supporter ladite peau (3).

3. Châssis (2), selon l'une quelconque des revendications 1 à 3, **caractérisé en ce qu'**il comporte des segments comprenant des nervures longitudinales.

4. Châssis (2), selon l'une quelconque des revendications 1 à 3, **caractérisé en ce qu'**il comporte des segments de section transversale en T, en sorte de former trois nervures longitudinales.

5. Châssis (2), selon l'une quelconque des revendications précédentes, **caractérisé en ce qu'**il est constitué de trois structures annulaires (21) juxtaposées reliées entre elles par des traverses (4), et de moyens de préhension et/ou des moyens de déplacement (5).

6. Châssis (2), selon la revendication précédente, **caractérisé en ce que** l'épaisseur desdites structures annulaires (21) et des traverses (4) est comprise entre 8 et 12 mm, de préférence 10 mm.

7. Gabarit support (1) pour la réception d'une pièce en matériau composite en vue de sa polymérisation en autoclave, comprenant un châssis (2) dont au moins une partie porte une peau (3) de réception de ladite pièce, ladite partie définissant la forme générale de ladite pièce, **caractérisé en ce qu'**il comporte un châssis (2) selon l'une quelconque des revendications précédentes, et **en ce que** ladite peau (3) est d'une nuance identique à celle utilisée pour ledit châssis (2).

8. Gabarit support (1), selon la revendication 7, **caractérisé en ce que** la peau (3) vient de moulage.

## Patentansprüche

1. Rahmen (2), von dem mindestens ein Teil dazu bestimmt ist, eine Haut (3) zur Aufnahme eines Teils aus in einem Autoklaven zu polymerisierendem Verbundmaterial zu tragen, wobei die besagte Haut (3) die allgemeine Form des besagten Teils definiert, wobei der besagte Rahmen (2) ein einstückiges Gußteil ist, **dadurch gekennzeichnet, dass**:
- der besagte mindestens eine Teil des Rahmens (2), der dazu bestimmt ist, die besagte Haut (3) zu tragen, aus einem Teil (22) besteht, der ergänzend zu der besagten Haut (3) geformt ist;
- der besagte Rahmen aus einer Legierung besteht, die einen Ausdehnungskoeffizienten < als 7,10⁻⁶ K⁻¹ bei 200°C aufweist.

2. Rahmen (2) nach dem vorhergehenden Anspruch, **dadurch gekennzeichnet, dass** der besagte Teil (22), der ergänzend zu der besagten Haut (3) geformt ist, vorstehende Elemente (40) umfasst, die dazu bestimmt sind, die Haut (3) zu tragen.

3. Rahmen (2) nach irgendeinem der Ansprüche 1 bis 3, **dadurch gekennzeichnet, dass** er Segmente umfasst, die Längsrippen umfassen.

4. Rahmen (2) nach irgendeinem der Ansprüche 1 bis 3, **dadurch gekennzeichnet, dass** er im Querschnitt T-förmige Segmente umfasst, sodass drei Längsrippen gebildet werden.

5. Rahmen (2) nach irgendeinem der vorhergehenden Ansprüche, **dadurch gekennzeichnet, dass** er aus drei aneinander gereihten ringförmigen Strukturen (21), die durch Querträger (4) miteinander verbunden sind, und Greifmitteln und/oder Verschiebungsmitteln (5) besteht.

6. Rahmen (2) nach dem vorhergehenden Anspruch, **dadurch gekennzeichnet, dass** die Dicke der besagten ringförmigen Strukturen (21) und der Querträger (4) zwischen 8 und 12 mm liegt, vorzugsweise 10 mm beträgt.

7. Traggestell (1) zum Aufnehmen eines Teils aus Verbundmaterial im Hinblick auf seine Polymerisation in einem Autoklaven, umfassend einen Rahmen (2), von dem mindestens ein Teil eine Haut (3) zur Aufnahme des besagten Teils trägt, wobei das besagte Teil die allgemeine Form des Teils definiert, **dadurch gekennzeichnet, dass** es einen Rahmen (2) nach irgendeinem der vorhergehenden Ansprüche umfasst und dass die besagte Haut (3) einen Farbton aufweist, der identisch mit derjenigem ist, der für den besagten Rahmen (2) verwendet wird.

8. Traggestell (1) nach Anspruch 7, **dadurch gekennzeichnet, dass** die Haut (3) ein Gußteil ist.

## Claims

1. A frame (2), at least part of which is intended to support a skin (3) for receiving a part made of composite material to be polymerized in an autoclave, said skin (3) defining the general shape of said part, said frame (2) being a single-piece foundry part, wherein :
- said at least one portion of the frame (2) intended to support said skin (3) is formed by a portion (22) having a shape complementary to said skin (3),
- said frame is made of an alloy having an expansion coefficient < 7.10⁻⁶ K⁻¹ at 200°C.

2. The frame (2) according to the preceding claim, wherein said portion (22) having a shape complementary to said skin (3) includes protruding elements (40) aimed at supporting said skin (3) .

3. The frame (2) according to any one of claims 1 to 3, wherein it includes segments comprising longitudinal ribs.

4. The frame (2) according to any one of claims 1 to 3, wherein it includes segments having a T-shaped cross-section, so as to form three longitudinal ribs.

5. The frame (2) according to any one of the preceding claims, wherein it is formed of three juxtaposed annular structures (21) interconnected by cross members (4), and gripping means and/or displacement means (5).

6. The frame (2) according to the preceding claim, wherein the thickness of said annular structures (21) and the cross members (4) varies between 8 and 12 mm, is preferably 10 mm.

7. A support jig (1) for receiving a part made of composite material for its polymerization in an autoclave, comprising a frame (2), at least a portion of which carries a skin (3) for receiving said part, said part defining the general shape of said part, wherein it includes a frame (2) according to any one of the preceding claims, and wherein said skin (3) is of a material grade identical to the one used for said frame (2).

8. The support jig (1) according to claim 7, wherein the skin (3) is made by molding.
